# EUROPEAN PATENT SPECIFICATION

(11) **EP 2 124 646 B1**
(45) Date of publication and mention of the grant of the patent: **12.09.2012**
(21) Application number: 08732070.1
(22) Date of filing: 13.03.2008
(51) Int. Cl.: A23L 2/56, A23L 2/60, A23L 2/68, A23L 1/236, A23L 2/58

(54) **DIET COLA BEVERAGES**
DIÄTCOLAGETRÄNKE
BOISSONS À BASE DE COLA POUR RÉGIME

(30) Priority: 14.03.2007 US 686335; 15.03.2007 US 686753
(43) Date of publication of application: 02.12.2009
(60) Divisional application: 12000251.4
(73) Proprietor: The Concentrate Manufacturing Company of Ireland, Hamilton HM 12 (BM)
(72) Inventor: LEE, Thomas, Scarsdale, NY 10583 (US); CHANG, Pei, K., Cortlandt Manor, NY 10567 (US); BELL, Zena, White Plains, NY 10603 (US); FINNERTY, Francis, M., Yorktown Heights, NY 10598 (US)
(74) Representative: Prins, Hendrik Willem
(86) International application number: PCT/US2008/056764
(87) International publication number: WO 2008/112839

(56) References cited:
- WO-A-99/34689
- WO-A-02/087358
- JP-A- 60 188 035
- JP-A- 2000 270 804
- "Low calorie sweetener prepn. - by incorporating stevia component, calcium lactate, sodium tartrate and potassium chloride and/or sodium chloride into maltitol" DERWENT,, 1 January 1900 (1900-01-01), XP002380834

## Description

### FIELD OF THE INVENTION

This invention relates to beverages and other beverage products, such as beverage concentrates, etc. In particular, this invention relates to cola beverages and other cola beverage products having formulations incorporating non-nutritive sweeteners and being suitable to meet market demand for natural ingredients and alternative nutritional characteristics or flavor profiles in beverages.

### BACKGROUND OF THE INVENTION

Carbonated beverages with cola flavor have been very popular in the U.S. and worldwide for decades. In 2004, it was estimated that a total of 4.8 billion cases (24 bottles of 8 oz per case) of cola beverages were consumed in the U.S. alone. In general, cola contains water, carbon dioxide, high fructose corn syrup (HFCS) or sugar, phosphoric acid, caramel color, and cola flavoring agents. There is market demand for beverages having alternative nutritional characteristics, including, for example, reduced or zero calorie content. Diet cola has been a very popular beverage in the U.S. and many other countries around the world. In 2004, diet colas accounted for more than 37% of all the cola beverages consumed in the U.S. Diet cola has ingredients similar to full calorie cola, except that HFCS or sugar is replaced by at least one artificial sweetener, for example aspartame. Artificial preservative or preservatives such as sodium benzoate may be included to ensure microbial safety. However, use of artificial sweeteners results in beverages which have a different quality of sweetness than full-calorie beverages, which is disliked by a fraction of the consumer population. For example, U.S. patent No. 4,956,191 suggests that carbonated beverages which contain blends of saccharin or Stevia extract with aspartame tend to be less organoleptically pleasing than those containing sugar.

So there is perceived market demand for diet cola beverages having good flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

For example, diet cola beverages have been produced which are sweetened with naturally occurring potent sweeteners such as Stevia extracts (Steviol glycosides, Rebaudioside A, etc), Lo Han Guo extract (including juice concentrate, powder and glycosides such as Mogroside V, etc.), Monatin, Thaumatin, Brazzein, Monellin, etc., alone or in combination. However, the straight replacement of artificial sweeteners with the afore-mentioned naturally occurring potent sweeteners, encounters problems of aftertaste (such as bitter, slow on-set, licorice and lingering), resulting in a beverage that does not impart a taste generally associated with cola or diet cola.

Thus, the development of new beverage formulations, for example, new beverage formulations employing alternative sweeteners, acidulants, flavorants, flavor enhancing agents and the like, presents challenges in addressing associated bitterness and/or other off-tastes. In addition, such challenges typically are presented in new beverage formulations developed for alternative nutritional characteristics and/or flavor profiles. There is need for new beverage formulations which can satisfactory meet the combination of objectives including nutritional, flavor, shelf life, and other objectives.
WO02087358 is directed to methods of improving the taste of diet beverages and food products.
WO9934689 is directed to the use of D-tagatose as a synergiser for potent natural sweeteners.

It is therefore an object of the present invention to provide beverages and other beverage products. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

### SUMMARY OF THE INVENTION

In accordance with a first aspect, a diet cola beverage product such as a diet cola beverage or beverage concentrate or other product is provided which comprises water; a natural, potent, non-nutritive sweetener; a natural, low potency, low calorie sweetener; acidulant as set out in the appended claims a caramel colorant; and cola flavor. It should be understood that reference to "sweetener" or "a sweetener," unless otherwise clear from context, is intended to mean one or a combination of multiple sweetener components.

In accordance with another aspect, a method of preparing a diet cola beverage product is provided which comprises mixing water with other ingredients, all or some of which are optionally pre-combined in any combination, where the other ingredients include a natural, potent, non-nutritive sweetener; a one natural, low potency, low calorie sweetener; acidulant as set out in the appended claims ; a caramel colorant; and cola flavor.

In accordance with another aspect, a clear diet cola beverage is provided comprising water, at least one natural, potent, non-nutritive sweetener, at least one natural, low potency, low calorie sweetener, acidulant as set out in the appended claims , and cola flavor. As used here, substantially clear means that the beverages have substantially no turbidity and substantially no color.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF CERTAIN EXEMPLARY EMBODIMENTS

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant, and cola flavoring. Exemplary optional added flavorings which may be suitable for at least certain formulations in accordance with this disclosure include citrus flavoring, spice flavorings and others. Carbonation in the form of carbon dioxide typically is added for effervescence. Preservatives can be added if desired, depending upon the other ingredients, production technique, desired shelf life, etc. Optionally, caffeine can be added. Certain exemplary embodiments of the cola-flavored carbonated beverages disclosed here characteristically contain carbonated water, sweetener, kola nut extract and/or other cola flavoring, caramel coloring, and optionally other ingredients. The beverages of the present invention may also contain other ingredients including, without limitation, vitamins, buffering agents, preservatives, salts, thickeners, and anti-foaming agents. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, liquid concentrates, coffee beverages, tea beverages, dairy beverages, flavored waters, enhanced waters, fruit juice and fruit juice-flavored drinks, sport drinks, and alcoholic products. The terms "beverage concentrate" and "syrup" are used interchangeably throughout this disclosure. At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in u.s. patent no. 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

Those of ordinary skill in the art will understand that, for convenience, some ingredients are described here in certain cases by reference to the original form of the ingredient in which it is added to the beverage product formulation. Such original form may differ from the form in which the ingredient is found in the finished beverage product. Thus, for example, in certain exemplary embodiments of the natural cola beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage concentrate, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

Various sweeteners are included in the formulations of the beverages disclosed here. The sweeteners are edible consumables suitable for consumption and for use in beverages. By "edible consumables" is meant a food or beverage or an ingredient of a food or beverage for human or animal consumption. The sweetener or sweetening agent used here and in the claims is preferably a natural, non-nutritive or low-calorie beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive and non-nutritive sweeteners. In addition, potent sweeteners include both natural potent sweeteners and artificial potent sweeteners. However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspertame | 200 times as sweet as sugar |
| Saccharine | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "low potency" sweetener is one which exhibits less sweetness than an equal amount by weight of sugar. As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie" natural sweetener is, generally, a naturally-occurring material which imparts sweetness to a beverage and which has a caloric content of less than about 4.0 cal/g. As used herein, a "low-calorie beverage" has fewer than 40 calories per 8 oz. serving of beverage. As used herein, "zero-calorie" means having less than 5 calories per serving, e.g., per 8 oz. for beverages. As used herein, "diet" refers to either "zero-calorie" or "low-calorie" beverage products.

Natural cola embodiments of the beverage products disclosed here are natural in the that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various naturally sweetened diet cola embodiments of the beverage products disclosed here include natural sweeteners. Suitable sweeteners and combinations of sweeteners are selected for the desired nutritional characteristics, taste profile, beverage mouthfeel and other organoleptic factors. Natural sweeteners suitable for at least certain exemplary embodiments include, for example, erythritol, tagatose, sorbitol, mannitol, xylitol, glycyrrhizin, malitol, lactose, Lo Han Guo ("LHG"), steviol glycosides, e.g., rebaudiosides such as Rebaudioside A, stevioside, etc., xylose, arabinose, lactitol, maltitol, and ribose, and protein sweeteners such as thaumatin, monellin, brazzein, and monatin. As further discussed below, exemplary natural, potent, non-nutritive sweeteners suitable for some or all embodiments of the beverage products disclosed here include, for example, Stevia extracts, steviol glycosides, e.g., rebaudioside A and stevioside, Lo Han Guo extracts, Lo Han Guo powder, mogroside V, monatin, glycyrrhizin, thaumatin, brazzein, monellin, and mixtures of any of them. Exemplary natural, low potency, low-calorie sweeteners suitable for some or all embodiments of the beverage products disclosed here include erythritol, tagatose, and mixtures of the two. Also, in at least certain exemplary embodiments of the beverage products disclosed here, a combination of one or more natural, potent, non-nutritive sweeteners and one or more natural, low potency, low calorie sweeteners is used to provide the sweetness and other aspects of the desired taste profile and nutritive characteristics, i.e. to provide a very good tasting, naturally-sweetened diet cola beverage. It should also be recognized that certain such sweeteners will, either in addition or instead, act as tastents, masking agents or the like in various embodiments of the beverages disclosed here, e.g., when used in amounts below its (or their) sweetness perception threshold in the beverage in question. Non-nutritive, potent sweeteners are typically employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ steviol glycosides, e.g. rebaudiosides and steviosides, and related compounds for sweetening. These sweeteners can be obtained, for example, by extraction or the like from the stevia plant. Stevia (e.g., *Stevia rebaudiana* Bertoni) is a sweet-tasting plant. The leaves contain a complex mixture of natural sweet diterpene glycosides. Steviol glycosides, e.g. rebaudiosides and steviosides, are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Luo Han Guo fruit. LHG contains triterpene glycosides or mogrosides, which constituents may be used as LHG sweeteners. Lo Han Guo is a potent sweetener which can be provided as a natural nutritive or natural non-nutritive sweetener. For example. Lo Han Guo juice concentrate may be a nutritive sweetener, and Lo Han Guo powder may be a non-nutritive sweetener. Luo Han Guo can be used as the juice or juice concentrate, powder, etc. Preferably LHG juice contains at least about 0.1%, e.g., from 0.1% to about 15%, mogrosides, preferably mogroside V, mogroside IV, (11-oxo-mogroside V), siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverages disclosed here.

Acid used in the cola beverages disclosed here can serve one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Phosphoric acid, an artificial compound, has been associated with the cola formulation since its inception. Replacing phosphoric acid with a natural acid has been a challenge. We have now discovered that by replacing phosphoric acid with an acidulant comprising at least two carboxylic acids, the bitter and tart aftertaste associated with the diet cola sweetened with natural potent sweetener(s) is greatly reduced. Exemplary acids found to be suitable for use in some or all embodiments of the naturally sweetened diet cola beverage products disclosed here include lactic, citric, tartaric, malic, fumaric, cinnamic, maleic, adipic, glutaric, succinic, ascorbic, gluconic acids, and mixtures of any of them. Surprisingly, an acidulant comprising a mixture of natural citric, tartaric, and lactic acids is found to impart certain exemplary embodiments of the naturally sweetened diet cola beverage formulations with a taste suitably approximating conventional cola beverages acidified with phosphoric acid. The ratio of citric:tartaric:lactic acids can be from about 20:1:2 to about 14:1:2. The concentration of acidulant in the beverage is from about 2.0 to about 4.0 g/L. The acidulant can also preferably comprise a mixture of citric and tartaric acid in a ratio of from about 6:1 1 to about 9:1, and at a total acidulant concentration of from about 4.0 to about 6.0 g/L of finished beverage. The acidulant can also preferably comprise a mixture of citric and malic acid in a ratio of from about 1:9 to about 9:1, and at a total acidulant concentration of from about 2.0 to about 4.0 g/L of finished beverage. The acidulant can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1% to 0.25% by weight of the beverage, depending upon the acidulant used, desired pH, other ingredients used, etc. The pH of at least certain exemplary embodiments of the beverages disclosed here can be a value within the range of from about 2.0 to about 5.0, e.g., typically, from about 2.0 to about 3.0. The acid in certain exemplary embodiments enhances beverage flavor. Too much acid can impair the beverage flavor and result in sourness or other off-taste, while too little acid can make the beverage taste flat.

The particular acids chosen and the amount used will depend, in part, on the other ingredients, the desired shelf life of the beverage product, as well as effects on the beverage pH, titratable acidity, and taste. Those skilled in the art, given the benefit of this disclosure, will recognize that in the formation of calcium-supplemented beverages, the presence of calcium salts increases the pH, which requires additional acids to assist the dissolution of the calcium salt and maintain a desirable pH. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Cola beverages typically exhibit a dark brown color derived from caramel coloring. Caramel is the dark brown material resulting from carefully controlled heat treatment of food grade carbohydrates, and therefore is known as "burnt sugar color." There are four classes of caramel, classified by the inclusion of or processing with additional reactants. Caramel class I is plain caramel with no added reactants, so it is natural. In order to darken the color of caramel, artificial reactants such as caustic sulfite and/or ammonia can be added. Caramel class II is caramel that has been processed with caustic sulfite. Caramel class III is caramel that has been processed with ammonia. Caramel class IV is caramel that has been processed with both caustic sulfite and ammonia, and is currently used in the beverage industry to impart a dark brown color to cola beverages. Of the four classes of caramel, currently only caramel class I can be used as a colorant in natural cola beverages, but for at least certain exemplary embodiments of the natural cola beverages disclosed here, caramel class I by itself impart a color which may be found insufficiently dark brown to meet the desired cola appearance. A natural colorant comprising caramel class I and concentrated apple extract has been found to provide sufficiently dark brown color to impart a satisfactory cola appearance. Thus, colorant suitable for certain embodiments of the cola beverages disclosed here comprises caramel class I and concentrated apple extract. In certain exemplary embodiments, the concentrated apple extract comprises coloring compounds and sugar extracted from apples. Preferably, such concentrated apple extract comprises a dark brown viscous liquid having a minimum color index of about 1.2 (420 nm, d = 10 mm, 0.4%), a pH of about 4 to about 6, and a Brix value of about 65 to about 72. In at least certain exemplary embodiments, the weight ratio of caramel class I to concentrated apple extract is from about 1:3 to about 1:5, and preferably is about 1:3.8. In at least certain exemplary embodiments, the total concentration of colorant is from about 5.0 to about 10.0 g/L of the beverage, and preferably is about 6.5 g/L of the beverage. It will be within the ability of those skilled in the art, given the benefit of this disclosure, to select suitable additional or alternative colorants for use in various embodiments of the beverage products disclosed here.

Certain exemplary embodiments of the beverages disclosed here also may contain small amounts of buffering agents to adjust pH. Such agents include, e.g., the sodium or potassium salts of lactic, citric, tartaric, malic, fumaric, cinnamic, maleic, adipic, glutaric, and succinic acids. The amount included will depend, of course, on the type of buffering agents and on the degree to which the pH is to be adjusted.

The beverages disclosed here optionally contain additional ingredient including, for example, flavorings such as natural fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., apple, banana, tomato, cranberry and the like, and those having a small, fleshy berry. The term berry also is used here to include aggregate fruits, i.e., not "true" berries, but fruit commonly accepted as such. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime, tangerine, mandarin orange, tangelo, pomelo, and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the cola beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used herein, one volume of carbon dioxide is defined as the amount of carbon dioxide absorbed by any given quantity of water at 60° F (16° C) and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. Preferably, the caffeine is natural in origin.

The beverage concentrates and beverages disclosed here optionally may contain other additional ingredients, including, generally, any of those typically found in beverage formulations. These additional ingredients, for example, can typically be added to a stabilized beverage concentrate. Examples of such additional ingredients include, but are not limited to, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established. Preferably, the additional ingredients are natural in origin.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. The acidulants (comprising a mixture of carboxylic acids) included in certain embodiments of the beverages disclosed herein can provide a beverage with pH less than 2.9, and thus enhance microbial stability of the beverage, so that benzoate and other artificial preservatives need not be included in the beverage. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known preservatives as sodium or potassium benzoate, sorbates, e.g., sodium, calcium, and potassium sorbate, sodium hexametaphosphate, EDTA, nisin, cinnamic acid, citrates, e.g., sodium citrate and potassium citrate, and antioxidants such as ascorbic acid. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., heat treatment or thermal processing steps, such as hot filling and tunnel pasteurization. Such steps can be used instead of addition of artificial preservatives to reduce yeast, mold and microbial growth in the beverage products. For example, U.S. patent No. 4,830,862 to Braun et al. discloses the use of pasteurization in the production of fruit juice beverages as well as the use of suitable preservatives in carbonated beverages. U.S. patent No. 4,925,686 to Kastin discloses a heat-pasteurized freezable fruit juice composition which contains sodium benzoate and potassium sorbate.

In certain exemplary embodiments of the beverages disclosed herein, the beverage is a zero-calorie beverage. In certain exemplary embodiments the beverage has no artificial sweeteners. In certain exemplary embodiments the beverage has no phosphoric acid. In certain exemplary embodiments the beverage has no benzoate.

### EXAMPLES

The following examples are specific embodiments of the present invention and are not intended to limit it. Unless otherwise indicated, all units are in grams.

### EXAMPLE 1

**TABLE 1**

| Ingredient | Control | Variant 1 | Variant 2 | Variant 3 | Variant 4 | Variant 5 | Variant 6 |
|---|---|---|---|---|---|---|---|
| Sodium benzoate | 0.52 | 0.52 | 0.52 | 0.52 | 0.52 | 0.52 | 0.52 |
| Sodium citrate | 0.31 | 0.31 | 0.31 | 0.31 | 0.31 | 0.31 | 0.31 |
| Rebaudio-side A | 1.50 | 1.50 | 1.50 | 1.50 | 1.50 | 1.50 | 1.80 |
| Erythritol | | 105 | | 105 | | 105 | 105 |
| Phosphoric acid 80% | 1.16 | 1.16 | | | | | |
| Citric acid | 0.21 | 0.21 | 2.46 | 2.46 | 3.96 | 3.96 | 3.96 |
| Tartaric acid | | | 0.15 | 0.15 | 0.49 | 0.49 | 0.49 |
| Lactic acid 88% | | | 0.17 | 0.17 | | | |
| Caramel color | 4.32 | 4.32 | 4.32 | 4.32 | 4.32 | 4.32 | 4.32 |
| Cola flavor | 4.33 | 4.33 | 4.33 | 4.33 | 4.33 | 4.33 | 4.33 |
| Caffeine | 0.24 | 0.24 | 0.24 | 0.24 | 0.24 | 0.24 | 0.24 |
| EDTA | 0.09 | 0.09 | 0.09 | 0.09 | 0.09 | 0.09 | 0.09 |
| Antifoaming agent | 0.56 | 0.56 | 0.56 | 0.56 | 0.56 | 0.56 | 0.56 |
| Treated water (up to) | 0.5 liter | 0.5 liter | 0.5 liter | 0.5 liter | 0.5 liter | 0.5 liter | 0.5 liter |

The control is a diet cola formulation sweetened with rebaudioside A. Each of the above variants was prepared by dissolving the above ingredients with vigorous stirring in sufficient water to obtain 0.5 liters of syrup. The syrup was then diluted with carbonated water in a 1 plus 5 "throw", meaning 1 part syrup was mixed with 5 parts carbonated water, to produce a finished diet cola beverage. The pH and titratable acidity (TA) of the de-gassed beverages were measured, the values for which are summarized below in Table 2.

**TABLE 2**

| | Control | Variant 1 | Variant 2 | Variant 3 | Variant 4 | Variant 5 | Variant 6 |
|---|---|---|---|---|---|---|---|
| pH | 3.09 | 3.09 | 3.25 | 3.23 | 2.91 | 2.94 | 2.94 |
| TA | 8.85 | 8.85 | 15.27 | 15.12 | 25.07 | 23.40 | 23.40 |

Each of the control and variant diet cola beverages was evaluated by at least 6 cola taste experts. The taste evaluation results are summarized below in Table 3. As can be seen from Table 3, Variants 3 and 6, which include rebaudioside A and erythritol as sweeteners, and a 3-way blend of lactic, citric, and tartaric acids or a 2-way blend of citric and tartaric acids, respectively, as acidulants, were judged to have very good cola flavor and taste.

**TABLE 3**

| | Control | Variant 1 | Variant 2 | Variant 3 | Variant 4 | Variant 5 | Variant 6 |
|---|---|---|---|---|---|---|---|
| Taste evaluation results | Sweet but also significant bitter aftertaste | Less bitter than control, but still quite bitter | Less bitter than control and V-1; slightly different tartness | Sweet and no bitterness; good cola flavor and taste | Much reduced bitterness but more tart than V-1 | No bitterness, but tart | No bitterness; good tartness; good cola flavor and taste |

### EXAMPLE 2

Diet cola beverage variants as disclosed in Example 1 are prepared without sodium benzoate or EDTA. The amounts of citric, tartaric, and lactic acids are adjusted so that the pH of each of the finished beverage variants is less than about 2.9. After diluting the syrups with carbonated water, the finished beverage variants are each subjected to tunnel pasteurization at 155 °F for 10 minutes. The combination of the carboxylic acids and tunnel pasteurization are believed to provide sufficient microbial stability so that no artificial preservatives are needed.

## Claims

1. A diet cola beverage product comprising:
(a) water;
(b) at least one natural, potent, non-nutritive sweetener importing less than 5 calories per 0,028 kg (802) serring of beverage to achieve the sweetness equivalent of 10 Prix of sugar;
(c) at least one natural, low potency, low calorie sweetener which exhibits less swetness than an equal amount by weight of sugar;
(d) an acidulant comprising at least two carboxylic acids selected from the group consisting of lactic, citric, tartaric, malic, fumaric, cinnamic, maleic, adipic, glutaric, and succinic acids;
(e) a caramel colorant; and
(f) cola flavor, wherein the diet cola beverage has less bitter aftertaste than a diet cola beverage of the same formulation except having an acidulant consisting essentially of phosphoric acid.

2. The diet cola beverage product of claim 1, wherein the natural, potent, non-nutritive sweetener comprises at least one of Stevia extract, rebaudioside A, steviol glycosides, Lo Han Guo extract, Lo Han Guo powder, mogroside V, monatin, glycyrrhizin, thaumatin, brazzein, and monellin; preferably wherein the natural, potent, non-nutritive sweetener comprises rebaudioside A.

3. The diet cola beverage product of claim 1 or 2, wherein the natural, low potency, low calorie sweetener comprises at least one of erythritol and tagatose.

4. The diet cola beverage product of claim 1-3, wherein the acidulant comprises citric and tartaric acids, preferably wherein the weight ration of citric acid to tartaric acid is from about 6:1 to about 9:1, and/or preferably the concentration of the acidulant is from about 4.0 g/L to about 6.0 g/L of finished beverage.

5. The diet cola beverage product of claim 1-3, wherein the acidulant comprises citric and malic acids; preferably wherein the weight ratio of citric acid to malic acid from about 1:9 to about 9:1, and/or preferably the concentration of the acidulant is from about 2.0 g/L to about 4.0 g/L of finished beverage.

6. The diet cola beverage product of claim 1-3, wherein the acidulant comprises citric, tartaric, and lactic acids; preferably wherein the weight ratio of citric acid to tartaric acid to lactic acid from about 20:1:2 to about 14:1:2, and/or preferably the concentration of the acidulant is from about 2.0 g/L to about 4.0 g/L of finished beverage.

7. The diet cola beverage product of claim 1-6, further comprising a buffering agent comprising at least one of the sodium or potassium salts of lactic, citric, tartaric, malic, fumaric, cinnamic, maleic, adipic, glutaric, and succinic acids.

8. The diet cola beverage product of claim 1-7, wherein the beverage product has no artificial sweeteners.

9. The diet cola beverage product of claim 1-8, wherein the beverage product has no phosphoric acid.

10. The diet cola beverage product of claim 1-9, wherein the beverage product has no benzoate.

11. A method of preparing a diet cola beverage comprising mixing together in any order:
(a) water;
(b) at least one natural, potent, non-nutritive sweetener importing less than 5 calories per 0,028 kg (802) serring of beverage to achieve the sweetness equivalent of 10 Prix of sugar;
(c) at least one natural, low potency, low calorie sweetener which exhibits less swetness than an equal amount by weight of sugar;
(d) an acidulant comprising at least two carboxylic acids selected from the group consisting of lactic, citric, tartaric, maleic, fumaric, cinnamic, maleic, adipic, glutaric, and succinic acids;
(e) a caramel colorant; and
(f) cola flavor, wherein the diet cola beverage has less bitter aftertaste than a diet cola beverage of the same formulation except having an acidulant consisting essentially of phosphoric acid.

12. The method of claim 11, further comprising the step of including carbonated water in the diet cola beverage.

13. The method of claim 11 or 12, further comprising the step of subjecting the diet cola beverage to tunnel pasteurization.

14. A clear diet cola beverage product comprising:
(a) water;
(b) at least one natural, potent, non-nutritive sweetener importing less than 5 calories per 0,028 kg (802) serring of beverage to achieve the sweetness equivalent of 10 Prix of sugar;
(c) at least one natural, low potency, low calorie sweetener which exhibits less swetness than an equal amount by weight of sugar;
(d) an acidulant comprising at least two carboxylic acids selected from the group consisting of lactic, citric, tartaric, malic, fumaric, cinnamic, maleic, adipic, glutaric, and succinic acids; and
(f) cola flavor, wherein the clear diet cola beverage has less bitter aftertaste than a diet cola beverage of the same formulation except having an acidulant consisting essentially of phosphoric acid.

## Patentansprüche

1. Diätcolagetränkeprodukt, umfassend:
(a) Wasser;
(b) mindestens ein natürliches, starkes, nicht nahrhaftes Süßungsmittel, welches weniger als 5 Kalorien pro 0,028 kg (8 Unzen) Getränkeportion verleiht, um die Süße zu erzielen, die 10 Brix Zucker entspricht;
(c) mindestens ein natürliches, kalorienarmes Süßungsmittel geringer Stärke, welches weniger Süße als eine gleiche Gewichtsmenge an Zucker aufweiset;
(d) ein Säuerungsmittel, welches mindestens zwei Carbonsäuren umfasst, die aus der Gruppe bestehend aus Milchsäure, Zitronensäure, Weinsäure, Äpfelsäure, Fumarsäure, Zimtsäure, Maleinsäure, Adipinsäure, Glutarsäure und Bernsteinsäure ausgewählt sind;
(e) einen Karamellfarbstoff; und
(f) Colageschmacksstoff, wobei das Diätcolagetränk einen weniger bitteren Nachgeschmack besitzt als ein Diätcolagetränk, welches angesehen von einem im Wesentlichen aus Phosphorsäure bestehenden Säuerungsmittel, die gleiche Formulierung aufweist.

2. Diätcolagetränkprodukt gemäß Anspruch 1, wobei das natürliche, starke, nicht nahrhafte Süßungsmittel mindestens eines aus Steviaextrakt, Rebaudiosid A, Steviolglycosiden, Lo Han Guo-Extrakt, Lo Han Guo-Pulver, Mogrosid V, Monatin, Glycyrrhizin, Thaumatin, Brazzein und Monellin enthält; wobei das natürliche, starke, nicht nahrhafte Süßungsmittel bevorzugt Rebaudiosid A enthält.

3. Diätcolagetränkeprodukte gemäß Anspruch 1 oder 2, wobei das natürliche, kalorienarme Süßungsmittel geringer Stärke mindestens eines von Erythrit und Tagatose enthält.

4. Diätcolagetränkeprodukt gemäß Anspruch 1 bis 3, wobei das Säuerungsmittel Zitronensäure und Weinsäure umfasst, wobei bevorzugt das Gewichtsverhältnis von Zitronensäure zu Weinsäure im Bereich von etwa 6:1 bis etwa 9:1 liegt, und/oder wobei bevorzugt die Konzentration des Säuerungsmittels im Bereich von etwa 4,0 g/l bis etwa 6,0 g/l des fertigen Getränks liegt.

5. Diätcolagetränkeprodukt gemäß Anspruch 1 bis 3, wobei das Säuerungsmittel Zitronensäure und Äpfelsäure umfasst; wobei bevorzugt das Gewichtsverhältnis von Zitronensäure zu Äpfelsäure im Bereich von etwa in bis etwa 9:1 liegt, und/oder wobei bevorzugt die Konzentration des Säuerungsmittels im Bereich von etwa 2,0 g/l bis etwa 4,0 g/l des fertigen Getränks liegt.

6. Diätcolagetränkeprodukt gemäß Anspruch 1 bis 3, wobei das Säuerungsmittel Zitronensäure, Weinsäure und Milchsäure umfasst; wobei bevorzugt das Gewichtsverhältnis von Zitronensäure, Weinsäure und Milchsäure im Bereich von etwa 20:1:2 bis etwa 14:1:2 liegt, und/oder wobei bevorzugt die Konzentration des Säuerungsmittels im Bereich von etwa 2,0 g/l bis etwa 4,0 g/l des fertigen Getränks liegt.

7. Diätcolagetränkeprodukt gemäß Anspruch 1 bis 6, welches ferner ein Puffermittel umfaßt, welches mindestens eines der Natrium- oder Kaliumsalze von Milchsäure, Zitronensäure, Weinsäure, Äpfelsäure, Fumarsäure, Zimtsäure, Maleinsäure, Adipinsäure, Glutarsäure und Bernsteinsäure enthält.

8. Diätcolagetränkeprodukt gemäß Anspruch 1 bis 7, wobei das Getränkeprodukt kein künstliches Süßungsmittel aufweist.

9. Diätcolagetränkeprodukt gemäß Anspruch 1 bis 8, wobei das Getränkeprodukt keine Phosphorsäure aufweist.

10. Diätcolagetränkeprodukt gemäß Anspruch 1 bis 9, wobei das Getränkeprodukt kein Benzoat aufweiset.

11. Verfahren zur Herstellung eines Diätcolagetränks, umfassend das Vermischen in irgendeiner Reihenfolge von:
(a) Wasser;
(b) mindestens einem natürlichen, starken, nicht nahrhaften Süßungsmittel, welches weniger als 5 Kalorien pro 0,028 kg (8 Unzen) Getränkeportion verleiht, um die Süße zu erzielen, die 10 Brix Zucker entspricht;
(c) mindestens einem natürlichen, kalorienarmen Süßungsmittel geringer Stärke, welches weniger Süße als eine gleiche Gewichtsmenge an Zucker aufweist;
(d) einem Säuerungsmittel, welches mindestens zwei Carbonsäuren enthält, die aus der Gruppe bestehend aus Milchsäure, Zitronensäure, Weinsäure, Äpfelsäure, Fumarsäure, Zimtsäure, Maleinsäure, Adipinsäure, Glutarsäure und Bernsteinsäure ausgewählt sind;
(e) einem Karamellfarbstoff; und
(f) Colageschmacksstoff, wobei das Diätcolagetränk einen weniger bitteren Nachgeschmack besitzt als ein Diätcolagetränk, welches angesehen von einem im Wesentlichen aus Phosphorsäure bestehenden Säuerungsmittel die gleiche Formulierung aufweist.

12. verfahren gemäß Anspruch 11, welches ferner den Schritt des Beifügens von kohlensäurehaltigem Wasser in das Diätcolagetränk umfaßt.

13. Verfahren gemäß Anspruch 11 oder 12, welches ferner einen Schritt umfasst, in dem das Diätcolagetränk Tunnelpasteurisierung unterzogen wird.

14. Klares Diätcolagetränkeprodukt, umfassend:
(a) Wasser;
(b) mindestens ein natürliches, starkes, nicht nahrhaftes Süßungsmittel, welches weniger als 5 Kalorien pro 0,028 kg (8 Unzen) Getränkeportion verleiht, um die Süße zu erzielen, die 10 Brix Zucker entspricht;
(c) mindestens ein natürliches, kalorienarmes Süßungsmittel, geringer Stärke, welches weniger Süße als eine gleiche Gewichtsmenge an Zucker aufweist;
(d) ein Säuerungsmittel, welches mindestens zwei Carbonsäuren umfasst, die aus der Gruppe bestehend aus Milchsäure, Zitronensäure, Weinsäure, Äpfelsäure, Fumarsäure, Zimtsäure, Maleinsäure, Adipinsäure, Glutarsäure und Bernsteinsäure ausgewählt sind; und
(f) Colageschmacksstoff, wobei das klare Diätcolagetränk einen weniger bitteren Nachgeschmack besitzt als ein Diätcolagetränk, welches angesehen von einem im Wesentlichen aus Phosphorsäure bestehenden Säuerungsmittel die gleiche Formulierung aufweist.

## Revendications

1. Boisson au cola basse calorie comprenant :
(a) de l'eau ;
(b) au moins un édulcorant non nutritif, naturel, puissant, apportant moins de 5 calories pour 0,028 kg (8 oz) de boisson servie pour obtenir le goût sucré équivalent à 10 Brix de sucre ;
(c) au moins un édulcorant naturel, peu calorifique, peu puissant qui offre un goût sucré inférieur à une quantité équivalente en poids de sucre ;
(d) un acidulant comprenant au moins deux acides carboxyliques choisis dans le groupe constitué par les acides lactique, citrique, tartrique, malique, fumarique, cinnamique, maléique, adipique, glutarique et succinique ;
(e) un colorant caramel ; et
(f) un arôme de cola, la boisson au cola basse calorie ayant un après-goût moins amer qu'une boisson au cola basse calorie de même formulation, mais ayant un acidulant se composant essentiellement d'acide phosphorique.

2. Boisson au cola basse calorie selon la revendication 1, dans laquelle l'édulcorant non nutritif, naturel, puissant comprend au moins l'un des composants choisis parmi un extrait de Stévia, le rébaudioside A, les glycosides de steviol, un extrait de Lo Han Guo, une poudre de Lo Han Guo, le mogroside V, la monatine, la glycyrrhizine, la thaumatine, la brazzéine et la monelline, de préférence dans laquelle l'édulcorant non nutritif, naturel, puissant comprend le rébaudioside A.

3. Boisson au cola basse calorie selon la revendication 1 ou 2, dans laquelle l'édulcorant naturel, peu calorifique, peu puissant comprend au moins l'un des composants choisis parmi l'érythritol et le tagatose.

4. Boisson au cola basse calorie selon l'une quelconque des revendications 1 à 3, dans laquelle l'acidulant comprend les acides citrique et tartrique, de préférence dans laquelle le rapport en poids de l'acide citrique à l'acide tartrique est d'environ 6:1 à environ 9:1, et/au de préférence la concentration de l'acidulant est d'environ 4,0 g/l à environ 6,0 g/l de la boisson finie.

5. Boisson au cola basse calorie selon l'une quelconque des revendications 1 à 3, dans laquelle l'acidulant comprend les acides citrique et malique, de préférence dans laquelle le rapport en poids de l'acide citrique à l'acide malique est d'environ 1:9 à environ 9:1, et/ou de préférence la concentration de l'acidulant est d'environ 2,0 g/l à environ 4,0 g/l de la boisson finie.

6. Boisson au cola basse calorie selon l'une quelconque des revendications 1 à 3, dans laquelle l'acidulant comprend les acides citrique, tartrique et lactique, de préférence dans laquelle le rapport en poids de l'acide citrique à l'acide tartrique à l'acide lactique est d'environ 20:1:2 à environ 14:1:2, et/ou de préférence la concentration de l'acidulant est d'environ 2,0 g/l à environ 4,0 g/l de la boisson finie,

7. Boisson au cola basse calorie selon l'une quelconque des revendications 1 à 6, comprenant en outre un agent tampon comprenant au moins l'un des sels choisis parmi les sels de sodium ou de potassium des acides lactique, citrique, tartrique, malique, fumarique, cinnamique, maléique, adipique, glutarique et succinique.

8. Boisson au cola basse calorie selon l'une quelconque des revendications 1 à 7, la boisson ne comprenant pas d'édulcorants artificiels.

9. Boisson au cola basse calorie selon l'une quelconque des revendications 1 à 8, la boisson ne comprenant pas d'acide phosphorique.

10. Boisson au cola basse calorie selon l'une quelconque des revendications 1 à 9, la boisson ne comprenant pas de benzoate.

11. Procédé de préparation d'une boisson au cola basse calorie comprenant le mélange ensemble et dans n'importe quel ordre de :
(a) l'eau;
(b) au moins un édulcorant non nutritif, naturel, puissant, apportant moins de 5 calories pour 0,028 kg (8 oz) de boisson servie pour obtenir le goût sucré équivalent à 10 Brix de sucre ;
(c) au moins un édulcorant naturel, peu calorifique, peu puissant qui offre un goût sucré inférieur à une quantité équivalente en poids de sucré ;
(d) un acidulant comprenant au moins deux acides carboxyliques choisis dans le groupe constitué par les acides lactique, citrique, tartrique, malique, fumarique, cinnamique, maléique, adipique, glutarique et succinique ;
(e) un colorant caramel ; et
(f) un arôme de cola, la boisson au cola basse calorie ayant un après-goût moins amer qu'une boisson au cola basse calorie de même formulation, mais ayant un acidulant se composant essentiellement d'acide phosphorique.

12. Procédé selon la revendication 11, comprenant en outre l'étape consistant à inclure une eau gazeuse dans la boisson au cola basse calorie.

13. Procédé selon la revendication 11 ou 12, comprenant en outre l'étape consistant à soumettre la boisson au cola basse calorie à une pasteurisation en tunnel.

14. Boisson au cola basse calorie limpide comprenant :
(a) de l'eau ;
(b) au moins un édulcorant non nutritif, naturel puissant, apportant moins de 5 calories pour 0,028 kg (8 oz) de boisson servie pour obtenir le goût sucré équivalent à 10 Brix de sucre ;
(c) au moins un édulcorant naturel, peu calorifique, peu puissant qui offre un goût sucré inférieur à une quantité équivalente en poids de sucre ;
(d) un acidulant comprenant au moins deux acides carboxyliques choisis dans le groupe constitué par les acides lactique, citrique, tartrique, malique, fumarique, cinnamique, maléique, adipique, glutarique et succinique ; et
(f) un arôme de cola, la boisson au cola basse calorie ayant un après-goût moins amer qu'une boisson au cola basse calorie de même formulation, mais ayant un acidulant se composant essentiellement d'acide phosphorique.
